# EUROPEAN PATENT SPECIFICATION

(11) **EP 0 952 108 B1**
(45) Date of publication and mention of the grant of the patent: **02.05.2003**
(21) Application number: 99105095.6
(22) Date of filing: 24.03.1999
(51) Int. Cl.: C01B 13/11

(54) **Ozonizer discharge cell and its manufacturing method**
Ozonisator-Entladungszelle und Verfahren zu seiner Herstellung
Cellule à décharge ozoniseur et procédé de fabrication de celle-ci

(30) Priority: 24.03.1998 JP 9670298
(43) Date of publication of application: 27.10.1999
(73) Proprietor: SUMITOMO PRECISION PRODUCTS COMPANY LIMITED, Amagasaki-shi, Hyogo Prefecture 660-0891 (JP)
(72) Inventor: Tokutake, Shigekazu, Amagasaki-shi, Hyogo 661-0012 (JP); Shimoda, Kyoji, Amagasaki-shi, Hyogo 660-0054 (JP)
(74) Representative: Wächtershäuser, Günter, Prof. Dr.

(56) References cited:
- DATABASE WPIL, week 7806, Derwent Publications Ltd., London GB, AN 78-11421A, Class C 01 B, XP002900505 & JP 52 156196 A (NIPPON ELECTRON OPTICS LAB.)
- DATABASE WPIL, week 8821, Derwent Publications Ltd., London GB, AN 88-143613, Class C 01 B, XP002900506 & JP 63 085005 A (KITADE)

## Description

### BACKGROUND OF THE INVENTION

### Field of the Invention

The present invention relates to a discharge cell used for a plate-type ozonizer and its manufacturing method.

### Description of the Prior Art

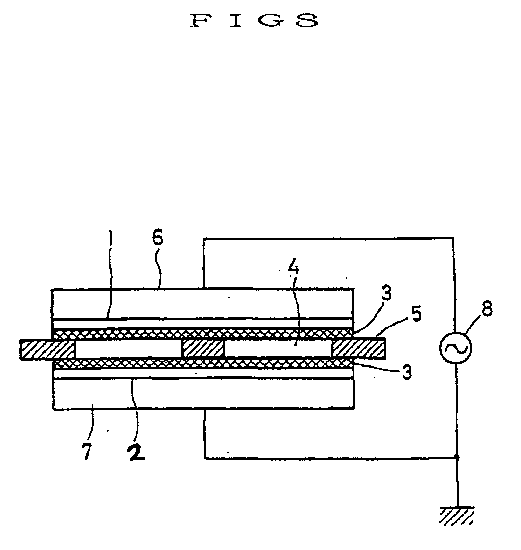

Figure 8 shows a conventional typical discharge cell used for a plate-type ozonizer, as it is disclosed in Japanese published application no. Hei 4-89303. The discharge cell is provided with a planar high-voltage electrode 1 and a planar earth electrode 2 that are arranged so as to face each other at a predetermined interval. Dielectrics 3 and 3 are formed on the facing surfaces of the high-voltage electrode 1 and earth electrode 2 by means of coating. Moreover, a spacer 5 is set between the dielectrics 3 and 3 In order to form a discharge void 4 having a predetermined gap.

Moreover, heat sinks 6 and 7 are provided at the outer side of the high-voltage electrode 1 and earth electrode 2 closely in contact with them. The heat sink 6 at the high-voltage electrode 1 is connected with the high-voltage terminal of a high-voltage power supply 8 and the heat sink 7 at the earth electrode 2 is earthed together with the earth terminal of the high-voltage power supply 8.

To produce ozone, a high voltage is applied between the high-voltage electrode 1 and the earth electrode 2 by the high-voltage power supply 8 connected to the heat sinks 6 and 7 to generate silent discharge in the discharge void 4 between the dielectrics 3 and 3. By circulating a feedstock gas such as oxygen gas or air through the discharge void 4 under the above state, some of the feedstock gas is exposed to the silent discharge and ozonized.

An actual plate-type ozonizer frequently uses a plurality of the above discharge cells by using each discharge cell as one module and superimposing the discharge cells on each other in the thickness direction.

### Problems to be Solved by the Invention

However, the above conventional ozonizer discharge cell has the following problems.

To form the discharge void 4 having a predetermined gap between the dielectrics 3 and 3, a spacer 5 is set between the dielectrics 3 and 3. The spacer 5 uses an elastic silicone sheet in order to protect the dielectrics 3 and 3 from the tightening force when superimposing a plurality of discharge cells on each other. This is because, if the spacer 5 is hard, the dielectrics 3 and 3 may be broken due to the force produced when superimposing a plurality of discharge cells on each other and tightening them.

However, ozone has an oxidation capacity coming after that of fluorine among natural oxidizing agents. Therefore, though a silicone sheet is superior in oxidation resistance, it is unavoidably changed in properties or deteriorated in quality due to the oxidation capacity after it is exposed to ozone for a long time. In this point, a conventional discharge cell has a problem in durability.

The spacer 5 made of a silicone sheet is bonded to the dielectrics 3 and 3 by an adhesive in order to secure the airtightness of the discharge void 4. However, because the bonding force is not large, the pressure of a feedstock gas circulating through the discharge void 4 is limited.

The high-voltage electrode 1 and earth electrode 2 produce heat by the discharge energy of generated silent discharge. This heat causes the ozone producing efficiency to lower because the heat accelerates the dissociation of produced ozone. To improve the above problem, the heat sinks 6 and 7 are stuck directly to the high-voltage electrode 1 and earth electrode 2 or stuck to the electrodes 1 and 2 through a sheet such as an aluminum foil superior in heat conductivity.

In this case, the heat sink 7 at the earth electrode 2 uses the water-cooled type having a high cooling efficiency and the heat sink 6 at the high-voltage electrode 1 uses the air-cooled type in order to prevent a short circuit due to cooling water having a low insulation resistivity. However, the air-cooled type is inferior to the water-cooled type in cooling efficiency. Therefore, in the case of a conventional discharge cell, the ozone producing efficiency is unavoidably lowered.

Moreover, the heat sinks 6 and 7 are large compared to other component members and the air-cooled-type heat sink 6 is particularly large. Therefore, it is difficult to downsize a discharge cell.

### Summary of the Invention

### Object

It is an object of the present invention to provide an ozonizer discharge cell superior in durability and capable of securing a high material-gas pressure while being compact, and having a high ozone producing efficiency. It is further object of the present invention to provide a manufacturing method for such an ozonizer discharge cell.

### Means for Solving the Problems

To achieve the above object, an ozonizer discharge cell of the present invention is constituted with one block or a plurality of blocks each of which is formed by integrally superimposing a plurality of ceramic layers and/or glass layers on each other in the layer thickness direction.

In the following, the invention will be disclosed with reference to an ozone discharge cell comprising a ceramic block formed by integrally superimposing a plurality of ceramic layers. However, the invention is also directed to embodiments wherein one or more of such ceramic layers are replaced by glass layers.

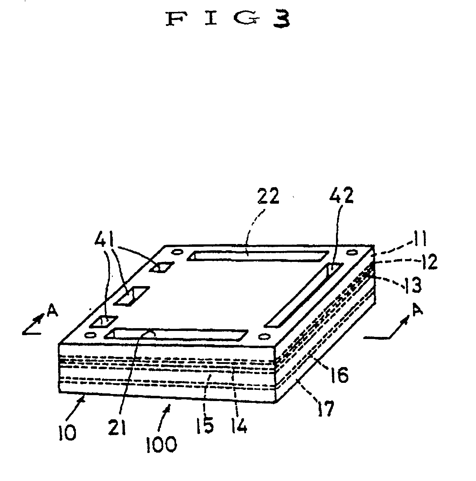

Specifically, as shown in Figures 3 to 5, according to one embodiment of the present invention, an ozonizer discharge cell of the present invention is provided with a ceramic block 10 formed by integrally superimposing a plurality of ceramic layers 11, 12, ... on each other in the thickness direction, a discharge void 20 formed between two ceramic layers 12 and 14 at both the sides of an intermediate ceramic layer 13 serving as a spacer in the ceramic block 10, and two planar electrodes 30 and 30 at the anti-void side(i.e. this side opposite to the void) of the two ceramic layers 12 and 14 at both the sides of the discharge void 20 and sealed between the two adjacent ceramic layers 11 and 12 and between the two adjacent ceramic layers 14 and 15.

In the case of discharge cell in Figures 3 to 5, a pair of ceramic layers 12 and 14 facing the discharge void 20 function as dielectrics, thereby discharge occurs in the discharge void 20, and some of a feedstock gas circulating through the void 20 is ozonized. In this case, the spacer forming the discharge void 20 is constituted with the intermediate ceramic layer 13. Therefore, even if the spacer is exposed to ozone for a long time, the spacer is not changed in properties or deteriorated in quality.

Because a pair of ceramic layers 12 and 14 at both the sides of the intermediate ceramic layer 13 are integrated by being superimposed with the intermediate ceramic layer 13 and other ceramic layers, the total ceramic thickness at a tightening portion increases. Therefore, though the spacer is constituted with the hard ceramic layer 13, the pair of ceramic layers 12 and 14 are not broken even if the tightening force is increased or other ceramic layers including the ceramic layer 13 are not broken.

Therefore, an ozonizer discharge cell of the present invention is superior in durability.

Moreover, because the ceramic layer 13 and the ceramic layers 12 and 14 at both the sides of the ceramic layer 13 are integrated, the discharge void 20 formed between the ceramic layers 12 and 14 is superior in airtightness. Therefore, it is also possible to secure a high material-gas pressure.

The planar electrodes 30 and 30 are cooled because a ceramic layer serves as an electric insulating layer. Moreover, similarly to the case of the discharge void 20, a thin coolant circulation route 40 is formed by using a ceramic layer as a spacer. Therefore, efficient cooling by water is also realized at the high-voltage electrode side. Furthermore, a cooling structure is prevented from increasing in size.

Therefore, an ozonizer discharge cell of the present invention is downsized and moreover, it is possible to secure a high ozone producing efficiency.

Though the planar electrodes 30 and 30 can use a conductive plate, it is preferable to use a conductive thin film formed on the surface of a ceramic layer through metallization because the conductive film can be integrated through printing baking. It is possible to form the thin film on the surfaces of the ceramic layers 12 and 14 constituting dielectrics at the anti-void side. Moreover, it is possible to form the thin film on the surfaces of the two ceramic layers 11 and 15 at both the sides of the ceramic layers 12 and 14 at the side facing the void. In any case, a formed thin film is sealed between the ceramic layers 12 and 14 and between the ceramic layers 11 and 15. This sealing is preferable from the viewpoints of improvement of the withstand voltage between a peripheral electrode and a part and improvement of the assembling characteristic due to decrease of the number of parts under assembling. One of the planar electrodes 30 and 30 can be exposed to the discharge void 20.

It is preferable to form a gas introduction route 21 for introducing a feedstock gas into the discharge void 20 and a gas discharge route 22 for discharging ozone gas produced in the discharge void 20 to the outside so as to penetrate a plurality of ceramic layers 11, 12,... in the layer thickness direction from the viewpoints of simplification and downsizing of a structure

Moreover, it is preferable to form a coolant introduction route 41 for introducing a coolant into a coolant circulation route 40 and a coolant discharge route 42 for discharging the coolant to the outside through the coolant introduction route 41 so as to penetrate a plurality of ceramic layers 11, 12, ... in the layer thickness direction from the viewpoints of simplification and downsizing of a structure.

The discharge void 20 and coolant circulation route 40 are constituted with a plurality of circulation routes divided in the direction perpendicular to the circulation direction in Figures 3 to 5. This is preferable from the viewpoint of the uniform distribution of fluid. The discharge void 20 is preferable from the viewpoints that a gap can be accurately held and moreover, creeping discharge can be expected.

This type of the ozonizer discharge cell can be easily manufactured by a method of working and/or treating a plurality of unbaked ceramic sheets so as to manufacture a plurality of ceramic sheets corresponding to a plurality of ceramic layers 11, 12, ...constituting the ceramic block 10 and superimposing the manufactured ceramic sheets on each other and baking them into the ceramic block 10.

The ceramic material may be sapphire, alumina, or zirconia. Particularly preferable ceramic is alumina of 90% or more which can be integrally baked with an electrode.

In the case of the discharge cell in Figures 3 to 5, the ceramic layers 12 and 14 facing the discharge void 20 function as dielectrics. It is preferable to coat the ceramic layer surface contacting the discharge void 20 with SiO₂. This is because, though the ozone producing efficiency and ozone concentration stability may be lowered by using a ceramic layer as a dielectric, these characteristics are prevented from lowering by coating the ceramic layer surface contacting the discharge void 20 with SiO₂. Though the reason is not certain, it is estimated that the rough surface of a ceramic layer is smoothed by coating the surface with SiO₂. This coating film can be easily formed by applying SiO₂ paste to the surface of an unbaked ceramic sheet and baking the paste together with the ceramic sheet. Moreover, the film can be easily formed by thermally spraying SiO₂ on the film after baking the film.

The gap of the discharge void 20 of an ozonizer discharge cell recently tends to decrease in size. This is because the cooling efficiency in the discharge void 20 is improved by narrowing the gap of the discharge void 20 and thereby the concentration of ozone gas can be increased and a discharge effect suitable for producing ozone can be obtained in accordance with an electron energy level.

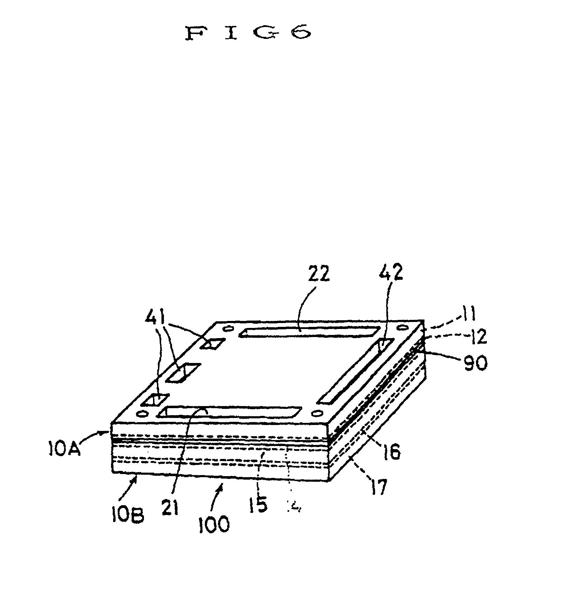

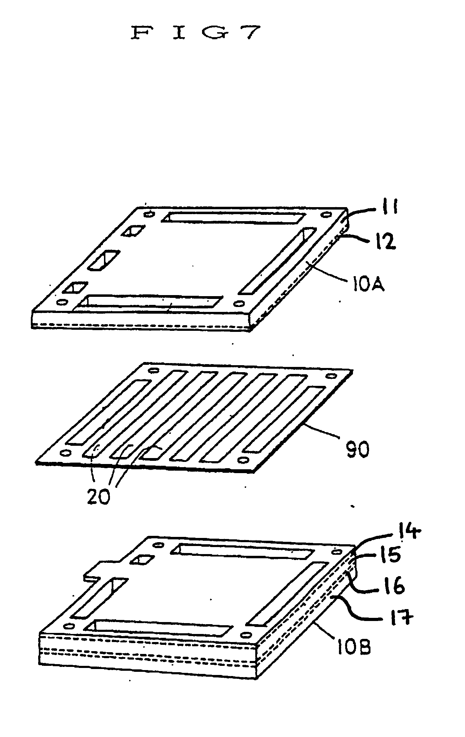

In the case of the discharge cell in Figures 3 to 5, the gap size of the discharge void 20 is determined by the thickness of the ceramic layer 13, that is, the thickness of a ceramic sheet corresponding to the ceramic layer 13. Therefore, it is easily possible to secure a thickness of up to approx. 0.1 mm. However, when a ceramic sheet is used, it is difficult to realize a gap size of 0.1 mm or less. To secure a gap size of 0.1 mm or less, a structure of joining two ceramic blocks 10A and 10B in which a plurality of ceramic layers 11, 12,... are integrally superimposed on each other in the layer thickness direction through a glass layer 90 serving as a spacer and a bonding layer is preferable as shown in Figures 6 and 7. By using the glass layer 90, it is easily possible to form the discharge void 20 having a gap size of 0.1 mm or less. Moreover, the discharge cell in Figures 6 and 7 is the same as the discharge cell in Figures 3 to 5 except that the ceramic layer 13 is replaced with the glass layer 90.

### BRIEF DESCRIPTION OF THE DRAWINGS

Figure 1 is a side view of an ozonizer using a discharge cell of an embodiment of the present invention;
Figures 2(a) and 2(b) are a top view and a bottom view of an upper-stage end plate used for the ozonizer in Figure 1;
Figure 3 is a perspective view of a discharge cell used for the ozonizer in Figure 1;
Figure 4 is a sectional view of the ozonizer in Figure 3, taken along the line A-A in Figure 3;
Figure 5 is perspective views of a plurality of ceramic layers constituting the discharge cell in Figure 1 by properly disassembling the ceramic layers;
Figure 6 is a perspective view of the discharge cell of still another embodiment of the present invention;
Figure 7 is an exploded perspective view of the discharge cell in Figure 6; and
Figure 8 is a sectional view of a conventional discharge cell.

### DETAILED DESCRIPTION OF THE PREFERRED EMBODIMENT

An embodiment of the present invention is described below by referring to the accompanying drawings.

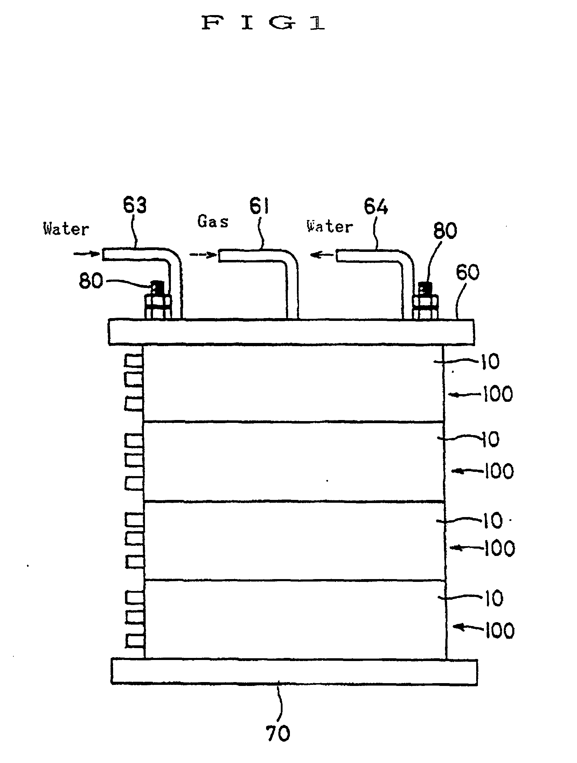

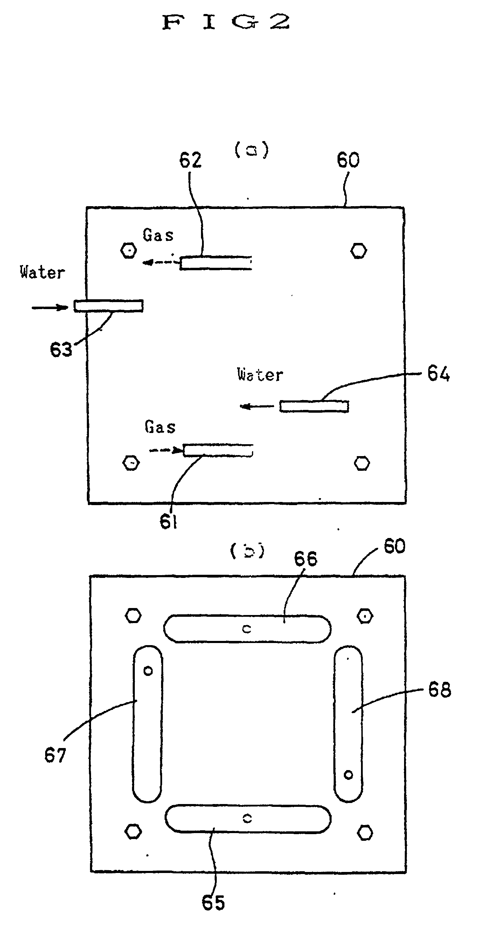

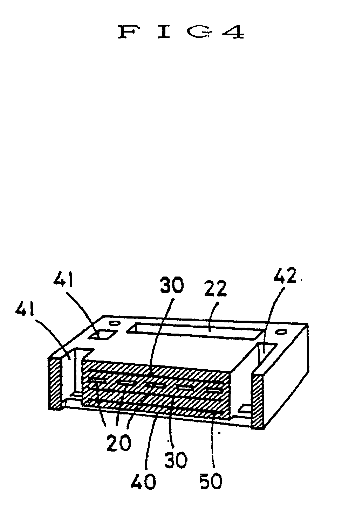

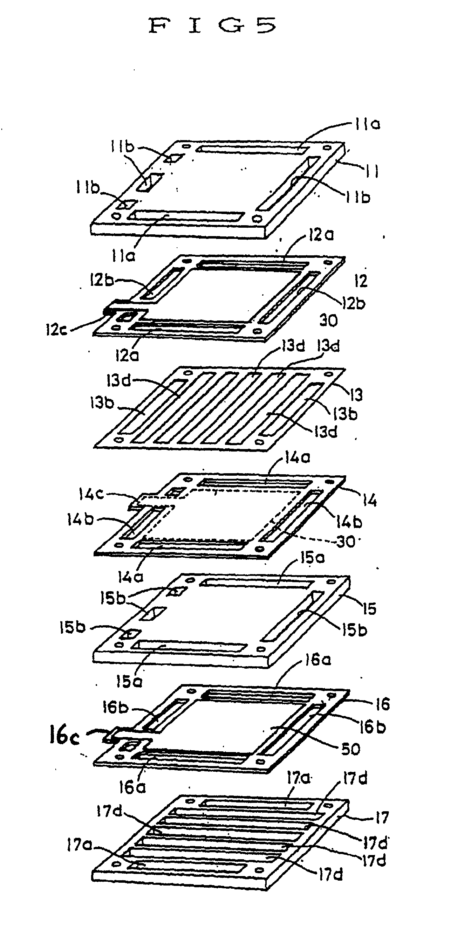

Figure 1 is a side view of an ozonizer using the discharge cell of an embodiment of the present invention, Figures 2(a) and 2(b) are a top view and a bottom view of an upper-stage end plate used for the ozonizer, Figure 3 is a perspective view of the discharge cell, Figure 4 is a sectional view of the discharge cell in Figure 3, taken along the line A-A in Figure 3, and Figure 5 is a perspective view of the discharge cell shown by disassembling a plurality of ceramic layers constituting the discharge cell for convenience' sake.

As shown in Figure 1, the ozonizer is constituted by superimposing a plurality of discharge cells 100, 100, ... (4 discharge cells in Figure 1) on each other, setting the cells between top and bottom end plates 60 and 70, and securing the discharge cells between the end plates 60 and 70 by four tie rods 80, 80, ... penetrating four comers of the end plates.

As shown in Figures 3 to 5, each discharge cell 100 is provided with a compressed rectangular-parallelepiped ceramic block 10. The ceramic block 10 is constituted by integrally superimposing seven ceramic layers 11 to 17 in the layer thickness direction. Each ceramic layer is a square thin plate and the structure of each ceramic layer is described later. In Figure 5, seven ceramic layers 11 to 17 are shown by separating them from each other in order to explain the structure and manufacturing method. In fact, however, the ceramic block 10 is integrated in the layer thickness direction (superimposing direction) without boundary.

A pair of top and bottom planar electrodes 30 and 30 for discharge are sealed in the ceramic block 10 along the upper and lower sides of the ceramic block 10. A discharge void 20 through which a feedstock gas circulates is formed between the planar electrodes 30 and 30 along the planar electrodes 30 and 30. A coolant circulation route 40 through which cooling water serving as a coolant circulates is formed at the lower side of the ceramic block 10 along the planar electrodes 30 and 30. A planar electrode 50 for an earth is sealed between the lower-stage planar electrode 30 and the coolant circulation route 40 along the planar electrodes 30 and 30. The discharge void 2C and coolant circulation route 40 are divided in the direction perpendicular to the fluid circulating direction.

A gas introduction route 21 and gas discharge route 22 for introducing and discharging a feedstock gas to and from the discharge void 20 are formed on the front and rear margins of the ceramic block 10 by vertically penetrating the ceramic block 10. A coolant introduction route 41 and coolant discharge route 42 for introducing and discharging a coolant to and from the coolant circulation route 40 are formed on the right and left margins of the ceramic block 10 by vertically penetrating the ceramic block 10.

Among the seven ceramic layers 11 to 17 constituting the ceramic block 10, the first ceramic layer 11 from the top serves as an insulator. The second ceramic layer 12 serves as a dielectric for discharge. The third ceramic layer 13 serves as a spacer for forming the discharge void 20. The fourth ceramic layer 14 serves as a dielectric for discharge. The fifth ceramic layer 15 serves as an insulator. The sixth ceramic layer 16 serves an earth.

The seventh, that is, the bottom ceramic layer 17 serves as a spacer for forming the coolant circulation route 40. Detailed structures of these ceramic layers are described below.

When the fifth ceramic layer 15 serving as an insulator has a sufficient thickness, leakage of current to a coolant is prevented even if the sixth ceramic layer 16 for an earth is not used. Therefore, the ceramic layer 16 can be omitted.

Apertures 11 a and 11 a for forming the gas introduction route 21 and gas discharge route 22 are provided at the front and rear margins of the first ceramic layer 11 serving as an insulator. Moreover, apertures 11 b and 11 b for forming the coolant introduction route 41 and coolant discharge route 42 are provided at the right and left margins of the first ceramic layer 11. The ceramic layer 11 has a thickness of, for example, 3.0 mm.

The upper side of the second ceramic layer 12 serving as a dielectric is covered with the planar electrode 30 made of a conductive thin film except the margin of the upper side.The planar electrode 30 is an earth electrode and a terminal portion 12c protruding to the lateral is provided for the ceramic layer 12 in order to draw a part of the electrode 30 to the outside of the ceramic block 10 and moreover, the upper side of the ceramic layer 12 is covered with the planar electrode 30. Moreover, the lower side of the ceramic layer 12 is coated with SiO₂. Furthermore, apertures 12a and 12a for forming the gas introduction route 21 and gas discharge route 22 are provided at the front and rear margins of the ceramic layer 12 and apertures 12b and 12b for forming the coolant introduction route 41 and coolant discharge route 42 are provided at the right and left margins of the ceramic layer 12. The ceramic layer 12 has a thickness of, for example, 0.3 mm. The planar electrode 30 has a thickness of, for example, 10 to 20 µm.

A plurality of slits 13d, 13d, ... extending from the front to rear margins are provided for the third ceramic layer 13 serving as a spacer for forming the discharge void 20 in the width direction at equal intervals in order to form the discharge void 20. Apertures 13b and 13b for forming the coolant introduction route 41 and coolant discharge route 42 are provided at the right and left margins of the ceramic layer 13. Because the gas introduction route 21 and gas discharge route 22 communicate with the discharge void 20, apertures for forming the routes 21 and 22 are not formed. The ceramic layer 13 has a small thickness of, for example, 0.2 mm in order to provide a narrow gap of the discharge void 20.

The fourth ceramic layer 14 serving as a dielectric is obtained by turning the second ceramic layer 12 inside out. Therefore, the lower side of the ceramic layer 14 is covered with the planar electrode 30 made of a conductive thin film. The planar electrode 30 is a high-voltage electrode. To draw a part of the high-voltage electrode to the outside of the ceramic block 10, a terminal portion 14c protruding to the lateral is provided for the ceramic layer 14 and the lower side of the ceramic layer 14 is covered with the planar electrode 30. Moreover, the upper side of the ceramic layer 14 is coated with SiO₂. Furthermore, apertures 14a and 14a for forming the gas introduction route 21 and gas discharge route 22 are provided at the front and rear margins of the ceramic layer 14 and apertures 14b and 14b for forming the coolant introduction route 41 and coolant discharge route 42 are provided at the right and left margins of the ceramic layer 14. The ceramic layer 14 has a thickness of, for example, 0.3 mm equal to that of the ceramic layer 12. Moreover, the planar electrode 30 has a thickness of, for example, 10 to 20 µm equal to that of the ceramic layer 12.

The fifth ceramic layer 15 serving as an insulator is the same as the first ceramic layer 11. Apertures 15a and 15a for forming the gas introduction route 21 and gas discharge route 22 are provided at the front and rear margins of the fifth ceramic layer 15 serving as an insulator. Moreover, apertures 15b and 15b for forming the coolant introduction route 41 and coolant discharge route 42 are provided at the right and left margins of the layer 15. The ceramic layer 15 has a thickness of, for example, 3.0 mm equal to that of the ceramic layer 11.

The sixth ceramic layer 16 serving as an earth is the same as the second ceramic layer 12. The upper side of the ceramic layer 16 is covered with a planar electrode 50 made of a conductive thin film for an earth except the margin of the upper side. To draw a part of the planar electrode 50 to the outside of the ceramic block 10, the ceramic layer 16 is provided with a terminal portion 16c protruding to the lateral and the upper side of the ceramic layer 16 is also covered with the planar electrode 50. Apertures 16a and 16a for forming the gas introduction route 21 and gas discharge route 22 are provided at the front and rear margins of the ceramic layer 16 and apertures 16b and 16b for forming the coolant introduction route 41 and coolant discharge route 42 are provided at the right and left margins of the layer 16. The ceramic layer 16 has a thickness of, for example, 0.3 mm equal to that of the ceramic layer 12. The planar electrode 50 has a thickness of, for example, 10 to 20 µm equal to that of the planar electrodes 30 and 30.

The seventh ceramic layer 17 serving as a spacer for forming the coolant circulation route 40 has a flat shape obtained by turning the third ceramic layer 13 for forming the discharge void 20 up to 90°. That is, a plurality of slits 17d, 17d, ... extending from one side margin to the other side margin are provided in the ceramic layer 17 in the width direction at equal intervals in order to form the coolant circulation route 40. Apertures 17a and 17a for forming the gas introduction route 21 and gas discharge route 22 are provided at the front and rear margins of the ceramic layer 17. Because the coolant introduction route 41 and coolant discharge route 42 communicate with the coolant circulation route 40, apertures for forming the coolant introduction route 41 and coolant discharge route 42 are not formed. The ceramic layer 17 has a thickness of, for example, 2.0 mm which is larger than that of the ceramic layer 13.

The ceramic block 10 is constituted by integrating the above seven ceramic layers 11 to 17. Therefore, discharge voids 20, ... are formed on the third layer of the ceramic block 10 and the coolant circulation route 40 is formed on the seventh layer of the block 10. Moreover, the gas introduction route 21 and coolant discharge route 22 communicating with the discharge void 20 and the coolant introduction route 41 and coolant discharge route 42 communicating with the coolant circulation route 40 are formed by penetrating each layer.

Furthermore, the upper-stage planar electrode 30 is sealed between the first ceramic layer 11 and the second ceramic layer 12 with the exception of a protrusion for a terminal. The lower-stage planar electrode 30 is sealed between the fourth ceramic layer 14 and the fifth ceramic layer 15 with the exception of a protrusion for a terminal and the planar electrode 50 for an earth is sealed between the fifth ceramic layer 15 and the sixth ceramic layer 16 with the exception of a protrusion for a terminal.

Furthermore, an ozonizer is constituted by superimposing the above discharge cells 100 on each other, setting them between the top and bottom end plates 60 and 70, and securing the end plates 60 and 70 with four tie rods 80, 80, ... penetrating four corners of them. Adjacent discharge cells 100 and 100 are joined by an epoxy adhesive or by means of brazing. In the case of brazing, tungsten or the like is baked on both the joint planes to apply Ni plating to the surfaces. A through-hole for passing the tie rod 80 is formed at four corners of the ceramic layers 11 to 17 of each ceramic block 10.

By superimposing discharge cells 100 on each other, the gas introduction routes 21, gas discharge routes 22, coolant introduction routes 43, and coolant discharge routes 42 of each ceramic block 10 respectively communicate with each other. Moreover, the lower side of the coolant circulation route 40 formed on the lower side of each of the first- to third-stage ceramic blocks 10, 10, and 10 is closed by the upper side of the lower-stage ceramic block 10 and the lower side of the coolant circulation route 40 formed on the lower side of the fourth-stage ceramic block 10 is closed by the upper side of the lower-stage end plate 70.

The end plates 60 and 70 are respectively made of a metallic plate such as a stainless steel plate. A gas introduction tube 61, gas discharge tube 62, coolant introduction tube 63, and coolant discharge tube 64 are set to the upper side of the upper-stage end plate 60 as shown in Figure 2. Moreover, four concave portions 65, 66, 67, and 68 are formed on the lower side of the end plate 60. A through-hole for passing the tie rod 80 is formed at four corners of each of the end plates 60 and 70.

The gas introduction tube 61 communicates with the gas introduction route 21 of each ceramic block 10 through the concave portion 65 formed on the lower side of the end plate 60. The gas discharge tube 62 communicates with the gas discharge route 22 of each ceramic block 10 through the concave portion 66 formed on the lower side of the end plate 60. The coolant introduction tube 63 communicates with the coolant introduction route 41 of each ceramic block 10 through the concave portion 67 formed on the lower side of the end plate 60. The coolant discharge tube 64 communicates with the coolant discharge route 42 of each ceramic block 10 through the concave portion 68 formed on the lower side of the end plate 60.

Functions of the ozonizer thus constituted are shown below.

In the case of the four discharge cells 100, 100,... secured between the end plates 60 and 70, the upper-stage planar electrode 30 serving as an earth electrode and planar electrode 50 for an earth are earthed and the lower-stage planar electrode 30 serving as a high-voltage electrode is connected to the high-voltage terminal of a high-voltage power supply.

In the case of each ceramic block 10, the gas introduction routes 21, gas discharge routes 22, coolant introduction routes 43 and coolant discharge routes 42 respectively communicate with each other. Moreover, the lower side of the coolant circulation route 40 formed on the lower side of each of the first- to third-stage ceramic blocks 10, 10, and 10 is closed by the upper side of the lower-stage ceramic block 10 and the lower side of the coolant circulation route 40 formed on the lower side of the fourth-stage ceramic block 10 is closed by the upper side of the lower-stage end plate 70.

Therefore, a feedstock gas introduced into an ozonizer through the gas introduction tube 61 is supplied to the discharge void 20 of each ceramic block 10 in parallel and discharged to the outside of the ozonizer through the gas discharge tube 62. Similarly, cooling water introduced into the ozonizer through the coolant introduction tube 63 is supplied to the coolant circulation route 40 of each ceramic block 10 in parallel and discharged to the outside of the ozonizer through the coolant discharge tube 64.

When operating the high-voltage power supply under the above state, a high voltage is applied between the planar electrodes 30 and 30. In this case, the planar electrodes 30 and 30 face the discharge void 20 formed inside of the ceramic layer 13 at both the sides of the ceramic layers 12 and 14. Therefore, silent discharge occurs in the discharge void 20 and a feedstock gas circulating through the discharge void 20 is ozonized. Because the discharge void 20 is divided in the direction perpendicular to the gas circulating direction, it is possible to accurately keep a discharge gap size for internal-pressure control or the like. Moreover, it is possible to expect superimposition of discharges due to creeping discharge and thereby, improve a power efficiency and an ozone producing efficiency. Furthermore, because the surfaces of the ceramic layers 12 and 14 contacting the discharge void 20 are coated with SiO₂, it is possible to further improve the ozone producing efficiency and stabilize the concentration of ozone.

Furthermore, when the entire surfaces of the ceramic layers 12 and 14 are coated with SiO₂, though a thin SiO₂ layer is present between the ceramic layers 12 and 13 and between the ceramic layers 14 and 13, the integrality of the ceramic layers 11 to 17 is not lost because the SiO₂ is also a ceramic layer.

Moreover, the planar electrodes 30 and 30 are cooled by the cooling water circulating through the lower-side coolant circulation route 40. In the case of the discharge cells 100 excluding the top-stage discharge cell 100, the planar electrodes 30 and 30 are cooled by the cooling water from the upper and lower sides. In the case of the top-stage discharge cell 100, it is expected that the planar electrodes 30 and 30 are cooled by the upper-stage end plate 60 from the upper side. Therefore, in the discharge cell 100 at each stage, the planar electrodes 30 and 30 are effectively cooled.

In this case, though the lower-stage planar electrode 30 is a high-voltage electrode, a short circuit due to cooling water does not occur because the ceramic layers 1.5 and 16 and the planar electrode 50 for an earth sealed between the ceramic layers 15 and 16 are provided between the planar electrode 30 and the coolant circulation route 40 below the electrode 30.

It is possible to omit the ceramic layer 16 provided with the planar electrode 50 serving as an earth depending on the thickness of the ceramic layer 15. Moreover, it is possible to provide the coolant circulation route 40 for not only the lower side of the planar electrodes 30 and 30 but also both the upper and lower sides of them. The thickness of the discharge cell 100, that is, the thickness of the ceramic block 10 is approx. 7 mm. This thickness includes a cooling portion. In the case of a conventional ozonizer having the same scale, because the thickness of a heat sink serving as a cooling portion increases, the thickness per cell becomes approx. 60 mm even when sharing the heat sink by upper and lower discharge cells. However, it is clear that the discharge cell 100 is very thin.

The ceramic layer 13 serving as a spacer for forming the discharge cell 20 between the planar electrodes 30 and 30 is not changed in properties or deteriorated in quality even after the layer 13 contacts ozone for a long time. Even if the ceramic block 10 is greatly tightened by the tie rods 80, 80, ... in the thickness direction, it is not broken because a tightened-portion thickness of approx. 7 mm is secured.

Because the ceramic layer 13 for forming the discharge cell 20 is integrated with the upper and lower ceramic layers 12 and 14 respectively serving as a dielectric, it provides a high airtightness for the discharge cell 20. Therefore, it is possible to raise the pressure of a feedstock gas.

Next, a manufacturing method of the discharge cell 100 is described.

The ceramic block 10 is manufactured by superimposing ceramic sheets before baked respectively referred to as a green sheet basically corresponding to each ceramic layer and baking them.

That is, punching for forming apertures for gas and coolant introduction routes and gas and coolant discharge routes is applied to ceramic sheets before baked corresponding to the first and fifth ceramic layers 11 and 15 of the ceramic block 10. Punching for forming an aperture for forming a circulation route is applied to ceramic sheets corresponding to the second, fourth, and sixth ceramic layers 12, 14, and 16 of the ceramic block 10 and moreover, paste for forming an electrode is applied to the ceramic sheets by means of screen printing. Moreover, SiO₂ is applied to the surfaces of the ceramic layers 12 and 14 at their anti-electrode side i.e. the side opposite to the electrode. Punching for forming apertures for forming gas and coolant introduction routes and gas and coolant discharge routes and apertures for forming gas and coolant circulation routes is applied to ceramic sheets before baked corresponding to the third and seventh ceramic layers 13 and 17 of the ceramic block 10.

These ceramic sheets are superimposed and integrated by a press while they are heated up to approx. 100°C and thereafter, heated up to approx. 1.500°C in a reducing atmosphere to bake the ceramic.

Thereby, the ceramic block 10 is completed and the discharge cell 100 is manufactured. The usage of the manufactured discharge cell 100 is already described above.

Thus the discharge cell 100 can be easily manufactured. Moreover, the discharge cell 100 is suitable for mass production. Furthermore, because it is possible to machine a spacer into an optional shape, the degree of freedom for designing the discharge void 20 is improved. For the discharge void 20 divided in the direction perpendicular to the circulating direction, improvement of power efficiency by creeping discharge, improvement of ozone producing efficiency, and stabilization of ozone concentration can be expected as described above.

It is preferable to use a ceramic sheet having an alumina purity of 90% or more from the viewpoint of integrally baking with an electrode. It is possible to use paste mainly containing tungsten, molybdenum, or silver as the paste for forming an electrode.

Figure 6 is a perspective view of the discharge cell of another embodiment of the present invention and Figure 7 is an exploded perspective view of the discharge cell in Figure 6.

This discharge cell is constituted by joining two ceramic blocks 10A and 10B through a glass layer 90. The ceramic block 10A is constituted with the above-described ceramics 11 and 12. The ceramic block 10B is constituted with the above-described ceramics 14, 15, 16, and 17. The glass layer 90 serves as a spacer for forming the discharge void 20 and a bonding layer. That is, this discharge cell uses the glass layer 90 instead of the ceramic layer 13 for forming the discharge void 20. This discharge cell is manufactured by the following method. That is, the ceramic blocks 10A and 10B are manufactured by using a ceramic sheet. The lower side of the ceramic block 10A and the upper side of the ceramic block 10B are coated with SiO₂. The coating method can use a method of thermally spraying SiO₂ on the lower side of the ceramic block 10A and the upper side of the ceramic block 10B after baking ceramic.

Moreover, to form the glass layer 90, a thin glass plate having a thickness of 0.05 mm is punched into a spacer shape and low-melting-point glass for bonding is applied to both the sides of the spacer. Finally, the ceramic blocks 10A and 10B are put at both the sides of the glass plate to fuse them.

The discharge cell thus manufactured makes it possible to decrease the gap size of the discharge void 20 to 0.1 mm or less. Moreover, because the ceramic blocks 10A and 10B are strongly bonded each other, it is possible to obtain the function same as that of the ceramic block 10. It is also possible to use print baked glass instead of the glass plate. Furthermore, it is possible to form a very thin spacer through thermal spraying of ceramic.

### Advantages of the Invention

As described above, an ozonizer discharge cell of the present invention is constituted by integrally superimposing a plurality of ceramic and/or glass layers on each other. Therefore, the entire cell including a spacer portion is extremely superior in durability and also has a high mechanical strength. Moreover, because a high airtightness can be provided for a discharge void, it is possible to secure a high material-gas pressure. Furthermore, because the cell is compact and makes it possible to secure a high cooling efficiency, a high ozone producing efficiency can be obtained.

Furthermore, a discharge cell manufacturing method of the present invention makes it possible to easily manufacture a compact, high-performance, and high-quality ozonizer discharge cell and decrease the manufacturing cost.

## Claims

1. A plate-type-ozonizer discharge cell (100) having a discharge gap (20) formed between a pair of planar electrodes (30) to ozonize a feedstock gas circulating through said discharge gap (20) by means of discharge, wherein a dielectric is arranged on one or both of said pair of planar electrodes (30) towards said discharge gap (20), and wherein said cell (100) is constituted with one block (10) or a plurality of blocks (10A, 10B) each of which is formed by integrally superimposing a plurality of ceramic layers (11 - 17) and/or glass layers (90) on each other in the layer thickness direction, wherein said discharge gap (20) is formed between two of said ceramic layers (11 - 17) and/or glass layers (90) of said one block (10) or said plurality of blocks (10A, 10B).

2. The ozonizer discharge cell (100) according to claim 1, wherein said discharge gap (20) is formed between two ceramic layers (12, 14) at both the sides of an intermediate ceramic layer (13) serving as a spacer in a ceramic block (10).

3. The ozonizer discharge cell (100) according to claim 1, wherein said discharge gap (20) is formed between two ceramic layers (12, 14) joined through a glass layer (90) serving both as a spacer and as a bonding layer.

4. The ozonizer discharge cell (100) according to claim 2 or 3, wherein said discharge gap (20) is divided into a plurality of sub-gaps (13a, 13b, ...) in the direction perpendicular to the gas circulating direction along a ceramic layer.

5. The ozonizer discharge cell (100) according to claim 1, 2, 3, or 4, wherein said dielectric is constituted with a ceramic layer (12, 14) facing said discharge gap (20).

6. The ozonizer discharge cell (100) according to claim 5, wherein the surface of the ceramic layer (12, 14) constituting said dielectric contacting said discharge gap (20) is coated with SiO₂.

7. The ozonizer discharge cell (100) according to claim 1, 2, 3, 4, 5, or 6, wherein said planar electrode (30) is provided at the side opposite to said discharge gap (20) of the ceramic layer (12, 14) which faces said discharge gap (20).

8. The ozonizer discharge cell (100) according to claim 7, wherein said planar electrode (30) is sealed between two adjacent ceramic layers (12, 14).

9. The ozonizer discharge cell (100) according to claim 7 or 8, wherein said planar electrode (30) is a conductive thin film formed by means of metallization on the surface of a ceramic layer.

10. The ozonizer discharge cell (100) according to claim 1, 2, 3, 4, 5, 6, 7, 8, or 9, wherein said block (10, 10A, 10B) has a gas introduction route (21) and a gas discharge route (22) formed by passing through a plurality of ceramic layers and/or glass layers in the layer thickness direction and communicating with said discharge gap (20).

11. The ozonizer discharge cell (100) according to claim 1, 2, 3, 4, 5, 6, 7, 8, 9, or 10, wherein said block (10, 10A, 10B) has a coolant circulation route formed at a position insulated from a planar electrode (30) by using a spacer ceramic layer (15) as a spacer.

12. The ozonizer discharge cell (100) according to claim 11, wherein said ceramic block (10, 10A, 10B) has a coolant introduction route (43) and a coolant discharge route (42) formed by passing through a plurality of ceramic layers and/or glass layers in the layer thickness direction and communicating with said coolant circulation route.

13. An ozonizer discharge cell manufacturing method for manufacturing the discharge cell (100) of claim 1, 2, 3, 4, 5, 6, 7, 8, 9, 10, 11, or 12 for a plate-type ozonizer, the method comprising the steps of working and/or treating a ceramic or glass sheet to be baked in order to manufacture a plurality of ceramic or glass sheets corresponding to a plurality of ceramic layers and/or glass layers constituting a block (10, 10A, 10B) and manufacturing a block (10, 10A, 10B) by superimposing and baking a plurality of manufactured ceramic and/or glass sheets.

14. The ozonizer discharge cell manufacturing method according to claim 13, wherein said ceramic sheet contains 90% or more of alumina.

15. The ozonizer discharge cell manufacturing method according to claim 13 or 14, wherein electrode forming paste is applied to the surface of a ceramic or glass sheet by printing before superimposing a plurality of ceramic and/or glass sheets on each other.

16. The ozonizer discharge cell manufacturing method according to claim 15, wherein said paste mainly contains tungsten, molybdenum, or silver.

## Patentansprüche

1. Plattenartige Ozonisator-Entladungszelle (100) mit einem zwischen einem Paar Planarelektroden (30) gebildeten Entladungsspalt (20), um ein durch den Entladungsspalt (20) zirkulierendes Beschickungsgas mittels einer Entladung zu ozonisieren, worin ein Dielektrikum auf einer oder beiden des Paares Planarelektroden (30) zum Entladungsspalt (20) hin angeordnet ist und worin die Zelle (100) mit einem Block (10) oder einer Mehrzahl von Blöcken (10A, 10B) geschaffen ist, von denen jeder gebildet wird, indem mehrere Keramikschichten (11-17) und/oder Glasschichten (90) in Richtung der Schichtdicke integral aufeinander gestapelt werden, wobei der Entladungsspalt (20) zwischen zwei der Keramikschichten (11 - 17) und/oder Glasschichten (90) des einen Blocks (10) oder der Mehrzahl von Blöcken (10A, 10B) geschaffen ist.

2. Ozonisator-Entladungszelle (100) nach Anspruch 1, worin der Entladungsspalt (20) zwischen zwei Keramikschichten (12, 14) an den beiden Seiten einer dazwischen liegenden Keramikschicht (13) gebildet ist, die als Abstandshalter in einem Keramikblock (10) dient.

3. Ozonisator-Entladungszelle (100) nach Anspruch 1, worin der Entladungsspalt (20) zwischen zwei Keramikschichten (12, 14) gebildet ist, die durch eine Glasschicht (90) verbunden sind, die sowohl als Abstandshalter als auch als Bindeschicht dient.

4. Ozonisator-Entladungszelle (100) nach Anspruch 2 oder 3, worin der Entladungsspalt (20) in der zur Gaszirkulationsrichtung senkrechten Richtung entlang einer Keramikschicht in eine Mehrzahl von Teilspalten (13a, 13b, ...) geteilt ist.

5. Ozonisator-Entladungszelle (100) nach Anspruch 1, 2, 3 oder 4, worin das Dielektrikum mit einer dem Entladungsspalt (20) zugewandten Keramikschicht (12, 14) geschaffen ist.

6. Ozonisator-Entladungszelle (100) nach Anspruch 5, worin die Oberfläche der Keramikschicht (12, 14), die das den Entladungsspalt (20) berührende Dielektrikum bildet, mit SiO₂ beschichtet ist.

7. Ozonisator-Entladungszelle (100) nach Anspruch 1, 2, 3, 4, 5 oder 6, worin die Planarelektrode (30) an der Seite vorgesehen ist, die dem Entladungsspalt (20) der Keramikschicht (12, 14) gegenüberliegt, die dem Entladungsspalt (20) zugewandt ist.

8. Ozonisator-Entladungszelle (100) nach Anspruch 7, worin die Planarelektrode (30) zwischen zwei benachbarten Keramikschichten (12, 14) versiegelt ist.

9. Ozonisator-Entladungszelle (100) nach Anspruch 7 oder 8, worin die Planarelektrode (30) ein mittels Metallisierung auf der Oberfläche einer Keramikschicht gebildeter leitfähiger dünner Film ist.

10. Ozonisator-Entladungszelle (100) nach Anspruch 1, 2, 3, 4, 5, 6, 7, 8 oder 9, worin der Block (10, 10A, 10B) eine Gaseinlassroute (21) und eine Gasauslassroute (22) hat, die geschaffen sind, indem sie durch eine Mehrzahl von Keramikschichten und/oder Glasschichten in Richtung der Schichtdicke verlaufen und mit dem Entladungsspalt (20) in Verbindung stehen.

11. Ozonisator-Entladungszelle (100) nach Anspruch 1, 2, 3, 4, 5, 6, 7, 8, 9 oder 10, worin der Block (10, 10A, 10B) eine Route zur Kühlmittelzirkulation hat, die an einer Stelle isoliert von einer Planarelektrode (30) unter Verwendung einer Abstandshalter-Keramikschicht (15) als Abstandshalter geschaffen ist.

12. Ozonisator-Entladungszelle (100) nach Anspruch 11, worin der Keramikblock (10, 10A, 10B) eine Kühlmitteleinlassroute (43) und eine Kühlmittelauslassroute (42) aufweist, die geschaffen sind, indem sie durch eine Mehrzahl von Keramikschichten und/oder Glassubstraten in Richtung der Schichtdicke verlaufen und mit der Route zur Kühlmittelzirkulation in Verbindung stehen.

13. Herstellungsverfahren für eine Ozonisator-Entladungszelle zum Herstellen der Ozonisator-Entladungszelle (100) nach Anspruch 1, 2, 3, 4, 5, 6, 7, 8, 9, 10, 11 oder 12 für einen plattenartigen Ozonisator, wobei das Verfahren die Schritte aufweist: Bearbeiten und/oder Behandeln einer zu brennenden Keramik- oder Glasplatte, um eine Mehrzahl von Keramik- oder Glasplatten entsprechend einer Mehrzahl von Keramikschichten und/oder Glasschichten herzustellen, die einen Block (10, 10A, 10B) bilden, und Herstellen eines Blocks (10, 10A, 10B) durch Stapeln und Brennen einer Mehrzahl hergestellter Keramikund/oder Glasplatten.

14. Herstellungsverfahren für eine Ozonisator-Entladungszelle nach Anspruch 13, worin die Keramikplatte 90% oder mehr Aluminiumoxid enthält.

15. Herstellungsverfahren für eine Ozonisator-Entladungszelle nach Anspruch 13 oder 14, worin auf die Oberfläche einer Keramik- oder Glasplatte durch Drucken vor einem Aufeinanderstapeln einer Mehrzahl von Keramik- und/oder Glasplatten eine eine Elektrode bildende Paste aufgebracht wird.

16. Herstellungsverfahren für eine Ozonisator-Entladungszelle nach Anspruch 15, worin die Paste hauptsächlich Wolfram, Molybdän oder Silber enthält.

## Revendications

1. Cellule de décharge de générateur d'ozone de type plaque (100) ayant un espace de décharge (20) formé entre une paire d'électrodes planes (30) pour ozoniser un gaz de charge circulant dans ledit espace de décharge (20) au moyen d'une décharge, dans lequel un diélectrique est agencé sur l'une de ladite paire d'électrodes planes (30) en direction dudit espace de décharge (20), et dans laquelle ladite cellule (100) est constituée d'un seul bloc (10) ou d'une pluralité de blocs (10A, 10B) dont chacun est formé par superposition solidaire d'une pluralité de couches céramiques (11-17) et/ou de couches de verre (90) les unes sur les autres dans la direction de l'épaisseur des couches, dans laquelle ledit espace de décharge (20) est formé entre deux desdites couches céramiques (11-17) et/ou couches de verre (90) dudit seul bloc (10) ou de ladite pluralité de blocs (10A, 10B).

2. Cellule de décharge de générateur d'ozone (100) selon la revendication 1, dans laquelle ledit espace de décharge (20) est formé entre deux couches céramiques (12, 14) des deux côtés d'une couche céramique intermédiaire (13) servant d'écarteur dans un bloc céramique (10).

3. Cellule de décharge de générateur d'ozone (100) selon la revendication 1, dans laquelle ledit espace de décharge (20) est formé entre deux couches céramiques (12, 14) réunies par l'intermédiaire d'une couche de verre (90) servant à la fois d'écarteur et de couche de liaison.

4. Cellule de décharge de générateur d'ozone selon la revendication 2 ou 3, dans laquelle ledit espace de décharge (20) est divisé en une pluralité de sous-espaces (13a, 13b, ...) dans la direction perpendiculaire à la direction de circulation de gaz le long d'une couche céramique.

5. Cellule de décharge de générateur d'ozone selon la revendication 1, 2, 3 ou 4, dans laquelle ledit diélectrique est constitué d'une couche de céramique (12, 14) faisant face audit espace de décharge (20).

6. Cellule de décharge de générateur d'ozone (100) selon la revendication 5, dans laquelle la surface de la couche de céramique (12, 14) constituant ledit diélectrique au contact dudit espace de décharge (20) est revêtu de SiO₂.

7. Cellule de décharge de générateur d'ozone (100) selon la revendication 1, 2, 3, 4, 5 ou 6, dans laquelle ladite électrode plane (30) est disposée sur le côté opposé audit espace de décharge (20) de la couche de céramique (12, 14) qui fait face audit espace de décharge (20).

8. Cellule de décharge de -générateur d'ozone (100) selon la revendication 7, dans laquelle ladite électrode plane (30) est scellée entre deux couches de céramique adjacentes (12, 14).

9. Cellule de décharge de générateur d'ozone (100) selon la revendication 7 ou 8, dans laquelle ladite électrode plane (30) est un film mince conducteur formé au moyen d'une métallisation sur la surface d'une couche de céramique.

10. Cellule de décharge de générateur d'ozone (100) selon la revendication 1, 2, 3, 4, 5, 6, 7, 8 ou 9, dans laquelle ledit bloc (10, 10A, 10B) a une voie d'introduction de gaz (21) et une voie de décharge de gaz (22) formées par passage au travers d'une pluralité de couches de céramique et/ou couches de verre dans la direction de l'épaisseur des couches et en communication avec ledit espace de décharge (20).

11. Cellule de décharge de générateur d'ozone (100) selon la revendication 1, 2, 3, 4, 5, 6, 7, 8, 9 ou 10, dans laquelle ledit bloc (10, 10A, 10B) a une voie de circulation de réfrigérant formée sur une position isolée d'une électrode plane (30) par utilisation d'une couche céramique d'écartement (15) servant d'écarteur.

12. Cellule de décharge de générateur d'ozone (100) selon la revendication 11, dans laquelle ledit bloc de céramique (10, 10A, 10B) a une voie d'introduction de réfrigérant (43) et une voie de décharge de réfrigérant (42) formées par passage au travers d'une pluralité de couches de céramique et/ou couches de verre dans la direction de l'épaisseur des couches et en communication avec ladite voie de circulation de réfrigérant.

13. Procédé de fabrication d'une cellule de décharge de générateur d'ozone pour fabriquer la cellule de décharge (100) de la revendication 1, 2, 3, 4, 5, 6, 7, 8, 9, 10, 11 ou 12 pour un générateur d'ozone de type plaque, le procédé comprenant les étapes d'usinage et/ou de traitement d'une feuille de céramique ou de verre à cuire afin de fabriquer une pluralité de feuilles de céramique ou de verre correspondant à une pluralité de couches de céramique et/ou couches de verre constituant un bloc (10, 10A, 10B) et de fabrication d'un bloc (10, 10A, 10B) par superposition et cuisson d'une pluralité de feuilles de céramique et/ou verre fabriquées.

14. Procédé de fabrication d'une cellule de décharge de générateur d'ozone selon la revendication 13, dans lequel ladite feuille de céramique contient 90 % ou plus d'alumine.

15. Procédé de fabrication d'une cellule de décharge de générateur d'ozone selon la revendication 13 ou 14, dans lequel ladite pâte formant électrode est appliquée à la surface d'une feuille de céramique ou de verre par impression avant superposition d'une pluralité de feuilles de céramique et/ou de verre les unes sur les autres.

16. Procédé de fabrication d'une cellule de décharge de générateur d'ozone selon la revendication 15, dans lequel ladite pâte contient principalement du tungstène, du molybdène ou de l'argent.
